(19) Europäisches Patentamt
European Patent Office
Office européen des brevets

(11) EP 4 502 566 A1

## (12) EUROPEAN PATENT APPLICATION

(43) Date of publication:
05.02.2025 Bulletin 2025/06

(21) Application number: 23189883.4

(22) Date of filing: 04.08.2023

(51) International Patent Classification (IPC):
$G01M\ 7/08^{(2006.01)}$     $G01N\ 29/04^{(2006.01)}$
$G01N\ 29/12^{(2006.01)}$     $G01N\ 3/30^{(2006.01)}$

(52) Cooperative Patent Classification (CPC):
B22F 10/28; B22F 10/80; B33Y 40/00; G01M 7/08;
G01N 29/045; G01N 29/42; G01N 29/4436;
G01N 29/46; B29C 64/153; B33Y 10/00; G01N 3/30

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GrindoSonic BV
3001 Leuven (BE)

(72) Inventor: VAN DEN BOSSCHE, Alex
3040 Neerijse (BE)

(74) Representative: IPLodge bv
Technologielaan 9
3001 Heverlee (BE)

## (54) METHOD AND SYSTEM FOR OBTAINING THE ELONGATION AT BREAK OF 3D PRINTED OBJECTS

(57) The present invention concerns a method and system for obtaining a fracture strain of a 3D printed object, whereby a longitudinal axis and at least one transversal axis are associated with the 3D printed object, the method comprising the steps of: - obtaining a Poisson effect parameter of the 3D printed object along with respect to the longitudinal axis and the transversal axis; - obtaining a damping parameter for an eigenfrequency along said longitudinal axis; - providing a reference correlation prescription for said 3D printed object between the Poisson effect parameter and the damping parameter on the one hand, and a fracture strain value on the other hand, and - deriving the fracture strain of the 3D printed object from said reference correlation prescription.

Fig. 4

## Description

### Technical field

The present invention concerns a method and system for obtaining the elongation at break of 3D printed objects. The elongation at break is obtained by non-destructively measuring at least two other material properties which, when combined, are correlated with the elongation at break of 3D printed objects. The present invention thus pertains to the field of non-destructively measuring material properties of 3D printed objects, preferably 3D printed test pieces.

### Background

The "elongation at break", also called "fracture strain" or "tensile elongation at break", is an important material parameter which can be measured with standardized tests. Elongation at break is a measure of a material's ductility and toughness. It quantifies the amount of deformation a material can withstand before breaking. Elongation is a metric that is regularly employed in the testing and assessment of materials for engineering and manufacturing applications.
Standardized test methods exist for obtaining the elongation at break, e.g. ASTM E8 and ASTM A370. These tests are destructive. Indeed, elongation at break is commonly measured by pulling on a test piece in a longitudinal direction until it breaks, thereby measuring the percentage elongation.
Two main problems arise for such standardized tests:

- They are, by their very nature, destructive, meaning that one cannot obtain the elongation at break of an object that will actually be used in later applications because the object needs to be broken. Hence, one can only make statistical or probability statements on the elongation by referring to tests performed on other, similar objects. Whereas this may give sufficiently accurate results for certain materials, it may not be accurately enough for 3D printed objects since, for such objects, the 3D printing process tends to lead to objects having a large spread in material properties.
- They are time consuming, and may require intensive preparation of the samples to be tested.

Tensile tests typically produce stress-strain diagrams used to determine tensile modulus, tensile strength (at yield and at break), tensile modulus, tensile strain, elongation, and percent elongation at yield, elongation at break and elongation at break in percent. It should be noted that generally elongation at break is expressed in percent, whereby the additional elongation is compared to the original length of the test piece, i.e. the length of the test piece when no stress is applied, e.g. using the formula $A = (Lb-L0)/L0 \times 100\%$, wherein A is the elongation at break in percent, Lb is the length at break, and L0 is the original length of the test piece.
Additive manufacturing (AM), also called three-dimensional or 3D printing, is a process which has gained a lot of momentum in recent years. It allows construction of a three-dimensional object from a CAD model or a digital 3D model. Hereby, material can be deposited, joined or solidified under control conditions to create a three-dimensional object, with material being added together, such as liquid molecules or powder grains being fused together, typically layer by layer. The precision, repeatability, and material range of 3D printing have increased to the point that some 3D printing processes are considered viable as an industrial-production technology. One of the key advantages of 3D printing is the ability to produce very complex shapes or geometries that would be otherwise impossible to construct by hand, including hollow parts or parts with internal truss structures to reduce weight.
In many cases it is necessary to ensure that 3D printed pieces meet required quality standards and that anomalies can be detected and characterized. It is thus important to have metrology tools for mechanical property evaluation and for appropriate anomaly detection, quality control, and monitoring.
Knowledge of when various types of deviations of quantities from the expected values appear, will increase the potential for early detection of significant flaws in additively manufactured parts and offers the potential opportunity for in-process intervention and to hence decrease the time and cost of repair or rework. Because the AM process involves incremental deposition of material, it gives unique opportunities to monitor the material quality as it is deposited. To meet this need there are a variety of sensing methods and signals which can be measured. Among the available measurement modalities, acoustic-based methods have the advantage of potentially providing real-time, continuous in-service monitoring of manufacturing processes at relatively low cost.
The present invention aims to provide a method and system capable of obtaining the elongation at break of 3D printed objects without destroying the 3D printed objects in the measurement process, and without the need of intricate sample preparation.

### Summary of the invention

The inventors have found that for 3D printed objects, a clear correlation exists between the fracture strain on the one hand and a Poisson effect parameter and a longitudinal eigenfrequency damping parameter on the other hand. Hereby,

- the fracture strain refers to the fracture strain along a longitudinal axis of the object,
- the Poisson effect parameter refers to a parameter representing the deformation of a material in a direction perpendicular to a load direction. A preferred Poisson effect parameter is the Poisson ratio with respect to said longitudinal axis and a transversal axis of the object which is perpendicular to the longitudinal axis, and
- the longitudinal eigenfrequency damping parameter refers to the parameter describing the attenuation of a longitudinal eigenfrequency of the object, preferably the first order longitudinal eigenfrequency. A damping parameter, also referred to as a damping coefficient, can be computed from the attenuation. Typically, attenuation can be quantified by looking at the eigenfrequency peak in the frequency spectrum of the vibrational response. Preferably, a damping parameter is related to a width of the eigenfrequency peak in the vibrational response, e.g. the width of the eigenfrequency peak at half maximum.

More in particular the fracture strain, also called the elongation at breakage, appears to be approximately proportionate to the product of the Poisson ratio and the damping parameter. In order to allow a certain degree of freedom to more accurately model the correlation, the elongation at breakage A can be derived from the following formula:

$$A = C.P_v^r.D^s \qquad \text{(form. 1)}$$

Herein, 'A' refers to the elongation at breakage, preferably expressed in percentage of the original length of the object, i.e. the length of the object when it is not put under stress, '$P_v$' is the Poisson ratio which is exponentiated by 'r', and 'D' is the damping parameter which is exponentiated by 's'. 'C' is a constant which typically depends on the dimensions and shape of the object.

The present invention concerns a method and system for obtaining a fracture strain of a 3D printed object. A longitudinal axis and at least one transversal axis are associated with the 3D printed object.

The method comprises the steps of:

- obtaining a Poisson effect parameter, preferably a Poisson ratio, of the 3D printed object along with respect to the longitudinal axis and the transversal axis
- obtaining a damping parameter for an eigenfrequency along said longitudinal axis
- providing a reference correlation prescription for said 3D printed object between the Poisson effect parameter and the damping parameter on the one hand, and a fracture strain value on the other hand, and
- deriving the fracture strain of the 3D printed object from said reference correlation prescription.

Without wishing to be bound by theory, the inventors believe that the tensile strength of a 3D printed object is determined by a combined phenomenon of increased microcrack propagation due to higher area reduction. The Poisson effect parameter basically describes the area reduction versus elongation in the elastic domain, whereas the damping provides a quantitative indication of the dissipative microcrack concentration and thus brittleness of and early failure by crack propagation of a 3D printed object during load. A part with a higher Poisson effect parameter in combination with a higher internal friction due to a high microcrack concentration, will take off with a higher area reduction already in the elastic domain and go faster to breakage due to increased microcrack propagation caused by the higher internal friction due to higher microcrack concentration in the material. Hence, area reduction and microcrack concentration reinforce one another, thereby having a major impact on the tensile strength and in particular on the elongation at breakage. It is suspected that this phenomenon has not been identified before as it may occur only if both area reduction and microcrack concentration occur at a high enough scale. This seems to be particularly relevant for 3D printed objects, whereby the 3D printing process may induce small yet significant variations between the objects with respect to porosity and microcrack concentration. The inventors have realized that porosity hereby has a direct effect on the Poisson effect parameter, and in particular on the Poisson ratio, and microcrack concentration has a direct effect on the attenuation of vibrations, as quantized by the damping coefficients of eigenfrequencies.

The Poisson effect parameter and the damping ratio can be obtained using one or more non-destructive measurement methods. A preferred non-destructive measurement method is an impact excitation measurement method. Hence, in a preferred embodiment, the Poisson effect parameter, the damping parameter or both, are obtained using an impact excitation measurement. Hereby an impact is provided to the 3D printed object, leading to a vibrational response. This vibrational response is captured, preferably acoustically, e.g. by a microphone. From the captured vibrational response, a set of eigenfrequencies of the 3D printed object can be obtained, as well as a set of damping parameters for each of the eigenfrequencies. The value of the eigenfrequencies can be used to obtain a value of the Poisson effect parameter. As such, both the Poisson effect parameter and the damping parameter used to derive the fracture strain, can be obtained non-destructively.

Hence, in an embodiment, the method of the present invention comprises the steps of:

- providing an impact, preferably a mechanical impact, to the 3D printed object;
- obtaining a vibrational response of 3D printed object to the impact in the frequency domain;
- extracting a set of eigenfrequencies, and a set of attenuations, from the vibrational response, each of said eigenfrequencies corresponding to a vibrational mode of said 3D printed object, and each of said attenuations corresponding to an eigenfrequency of said set of eigenfrequencies, whereby the set of eigenfrequencies comprises at least one eigenfrequency corresponding to a longitudinal mode of the 3D printed object and at least one eigenfrequency corresponding to a transversal mode of the 3D printed object;
- obtaining the Poisson effect parameter, preferably the Poisson ratio, on the basis of the obtained set of eigenfrequencies, and
- obtaining the damping parameter on the basis the obtained set of attenuations

Hereby the Poisson effect parameter and the damping parameter can be used to derive the fracture strain of the 3D printed object as disclosed above and further in this document.

For beam-shaped 3D printed objects, the set of frequencies can be used directly to obtain the Poisson effect parameter. For instance, the eigenfrequency $f_f$ of a longitudinal vibration mode is indicative of the sample's dynamic Young's modulus E. For a beam with mass m, length L, width b, and thickness t, one may use the following relation:

$$E = 0.9465 \left( \frac{mf_f^2}{b} \right) \left( \frac{L^3}{t^3} \right) T$$

with the correction factor T defined as

$$T = 1 + 6.585 \left( \frac{t}{L} \right)^2 \quad \text{if} \quad L/t \geq 20.$$

The eigenfrequency ft of a torsion vibration mode is indicative of the sample's shear modulus. Note that the torsion vibration mode is essentially perpendicular to the longitudinal vibration modes, and is thus considered a transversal mode. For the beam with mass m, length L, width b, and thickness t, one may use the following relation:

$$G = \frac{4Lmf_t^2}{bt} R$$

with the correction factor R defined as

$$R = \left[ \frac{1 + \left( \frac{b}{t} \right)^2}{4 - 2.521 \frac{t}{b} \left( 1 - \frac{1.991}{e^{\pi \frac{b}{t}} + 1} \right)} \right] \left[ 1 + \frac{0.00851 b^2}{L^2} \right] - 0.060 \left( \frac{b}{L} \right)^{\frac{3}{2}} \left( \frac{b}{t} - 1 \right)^2.$$

These known ways to determine E and G rely only on the peak frequencies in the spectrum of the sample's response. The Poisson ratio can be obtained from Young's modulus E and the shear modulus G according to:

$$\nu = \frac{E}{2G} - 1$$

Note that the Poisson effect parameter may be the Poisson ratio as defined above, but may also be another parameter, such as E/G or G/E or any other parameter which is representative of the deformation of a material in a direction perpendicular a load direction.

Given that the fracture strain can be derived from the Poisson effect parameter and the damping parameter, both of which can be obtained from the vibrational response to an impact provided to a 3D printed object. The present invention thus also relates to a method for obtaining a fracture strain of a 3D printed object along a longitudinal axis associated with the 3D printed object, whereby at least one transversal axis is associated with the 3D printed object, which transversal axis is perpendicular to the longitudinal axis, the method comprising the steps of:

- providing an impact, preferably a mechanical impact, to the 3D printed object;
- obtaining a vibrational response of 3D printed object to the impact in the frequency domain;
- extracting a set of eigenfrequencies, and a set of attenuations, from the vibrational response, each of said eigenfrequencies corresponding to a vibrational mode of said 3D printed object, and each of said attenuations corresponding to an eigenfrequency of said set of eigenfrequencies, whereby the set of eigenfrequencies comprises at least one eigenfrequency corresponding to a longitudinal mode of the 3D printed object and at least one eigenfrequency corresponding to a transversal mode of the 3D printed object;
- providing a reference correlation prescription for said 3D printed object between:

  • the at least one eigenfrequency corresponding to a longitudinal mode,
  • the at least one eigenfrequency corresponding to a transversal mode, and
  • a damping parameter of the at least one eigenfrequency corresponding to a longitudinal mode

on the one hand, and a fracture strain value on the other hand, and

- deriving the fracture strain of the 3D printed object from said reference correlation prescription.

As such, the fracture strain of a 3D printed object can be essentially directly obtained from a vibrational response to an impact, without explicitly calculating a specific Poisson effect parameter, such as a Poisson ratio.

The present invention also concerns a system for non-destructively obtaining a fracture strain of a 3D printed object, comprising:

- an impactor for providing an impact to a solid piece, preferably a mechanical impactor;
- a sensor for obtaining a vibrational response of the solid piece to the impact;
- processing means configured to:

  • compute the vibrational response in the frequency domain;
  • extracting a set of eigenfrequencies, and a set of attenuations, from the vibrational response, each of said eigenfrequencies corresponding to a vibrational mode of said 3D printed object, and each of said attenuations corresponding to an eigenfrequency of said set of eigenfrequencies, whereby the set of eigenfrequencies comprises at least one eigenfrequency corresponding to a longitudinal mode of the 3D printed object and at least one eigenfrequency corresponding to a transversal mode of the 3D printed object;
  • computing at least one damping parameter from an attenuation corresponding to said at least one eigenfrequency corresponding to a longitudinal mode of the 3D printed object;
  • deriving the fracture strain of the 3D printed object from a reference correlation prescription.

Hereby, the reference correlation prescription can be a reference correlation prescription for said 3D printed object between:

  • the at least one eigenfrequency corresponding to a longitudinal mode,
  • the at least one eigenfrequency corresponding to a transversal mode, and
  • a damping parameter of the at least one eigenfrequency corresponding to a longitudinal mode

on the one hand, and a fracture strain value on the other hand.

Alternatively, the reference correlation prescription can be a reference correlation prescription for said 3D printed object between a Poisson effect parameter and a damping parameter on the one hand, and a fracture strain value on the other hand, and the processing means can be further configured for:

- obtaining the Poisson effect parameter on the basis of the obtained set of eigenfrequencies, and
- obtaining the damping parameter on the basis the obtained set of attenuations

Systems for obtaining a vibrational response to an impact of an object are commercially available, and are disclosed in e.g. WO2019020825A1, WO2020254698, WO2022148827A1, WO2022189466A1, WO2023083944A1. Such prior art systems may be altered to derive the fracture strain, e.g. by reconfiguring the processing means in accordance with the present invention, and in particular to derive the fracture strain of the 3D printed object using a reference correlation prescription as described above and further in this document.

**Overview of the figures**

Fig. 1 shows the stress strain curves of four beam-shaped 3D printed test pieces.

Fig. 2 shows the Poisson ratio's of the four test pieces.

Fig. 3 shows the damping parameters of the four pieces.

Fig. 4 shows an example of a reference correlation prescription for 3D printed objects having the shape and size of the test pieces, the correlation prescription being presented between the Poisson ratio's of fig. 2 and the damping parameters of fig. 3 on the one hand, and a fracture strain value on the other hand. "QF" refers to the product of the Poisson ratio and the damping parameter, multiplied by 1000 for ease of readability, and "A" refers to fracture strain in percent.

**Detailed description of the invention**

The main insight leading to the present invention is the discovery of a correlation between the fracture strain on the one hand and a combination, preferably the product, of a Poisson effect parameter and a longitudinal damping parameter for 3D printed objects, together with the realisation that both quantities can be measured non-destructively. One possible explanation of this correlation has been provided above.

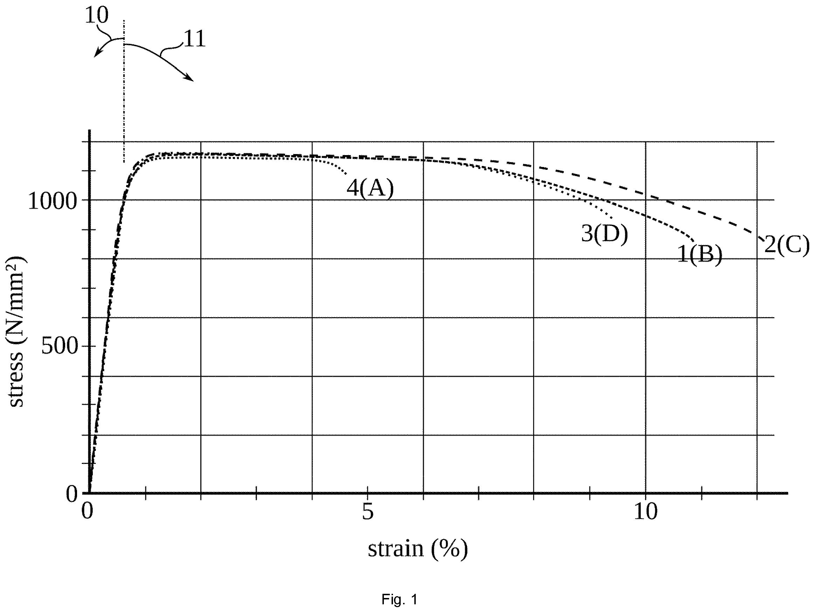

Evidence for the correlation is provided in figs. 1-4. Fig. 1 shows the stress strain curves of four beam-shaped 3D printed test pieces. The test pieces are 3D printed using the same process, yet it is seen from the stress-strain curves that they have different properties with respect to plastic deformation: the first part (10) of the curves, relating to elastic deformation, essentially coincide, indicating that the four test pieces have essentially the same Young modulus; the second part (11) of the curves, relating to plastic deformation, differ considerably amongst the four pieces. The results are summarized in the table below:

| No. | $d_0$ (mm) | $S_0$ (mm$^2$) | $L_0$ (mm) | Fmax (N) | A (%) |
|-----|--------|-----------|--------|----------|-------|
| 1 | 8 | 50.27 | 40.06 | 58060 | 10.4 |
| 2 | 7.99 | 50.14 | 40.01 | 58279 | 11.7 |
| 3 | 8.01 | 50.39 | 40.11 | 58466 | 8.9 |
| 4 | 8 | 50.27 | 40.06 | 57601 | 4.0 |

The test pieces are cylindrically shaped with diameter $d_0$, area $S_0$ and length $L_0$. $F_{max}$ is the maximal tensile strength and A is the elongation at break in percent.

The test pieces were 3D printed using selective laser melting (SLM). It can be reasonably expected that the results do not qualitatively change if the objects are 3D printed using other techniques.

Hence, in an embodiment, the 3D printed objects are 3D printed using powder bed fusion, preferably selective laser melting. Alternatively, or additionally, the 3D printed objects may be manufactured using any or any combination of the following techniques:

- Vat photopolymerization
- Material jetting
- Binder jetting
- Material extrusion
- Directed energy deposition
- Sheet lamination

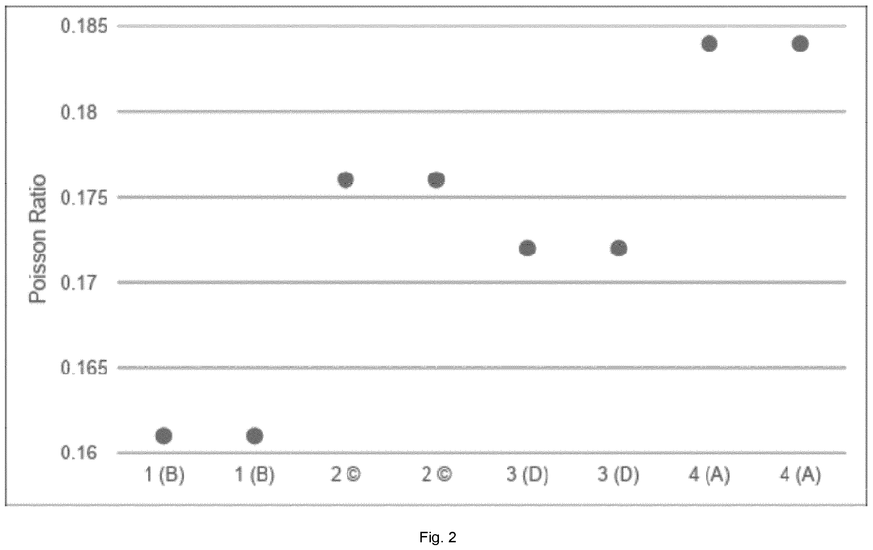

Fig. 2 shows the Poisson ratio's of the four test pieces. The two values per test piece are obtained using the GrindoSonic® MK7 apparatus. Hereby, two measurements are performed in order to check repeatability, which turns out to be very good for the Poisson ratio.

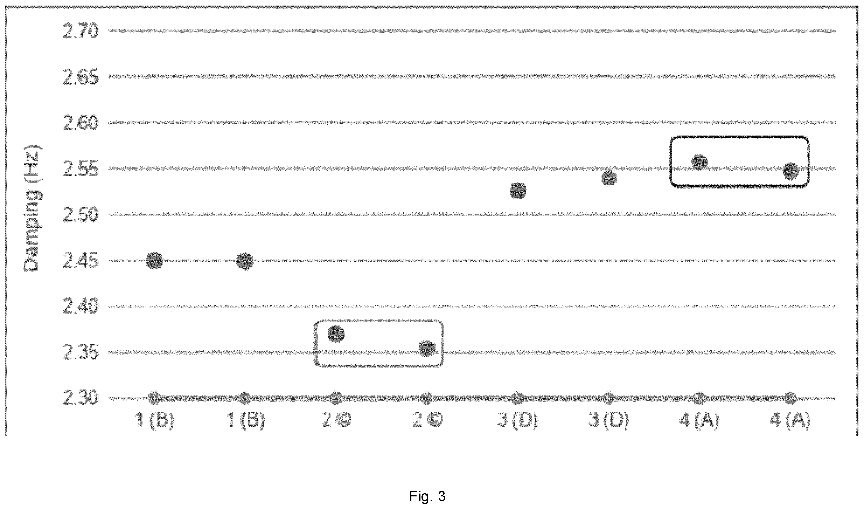

Fig. 3 shows the damping parameters of the four pieces. The two values per test piece are obtained using the GrindoSonic® MK7 apparatus. Hereby, two measurements are performed in order to check repeatability, which turns out to be good to within the 2% level.

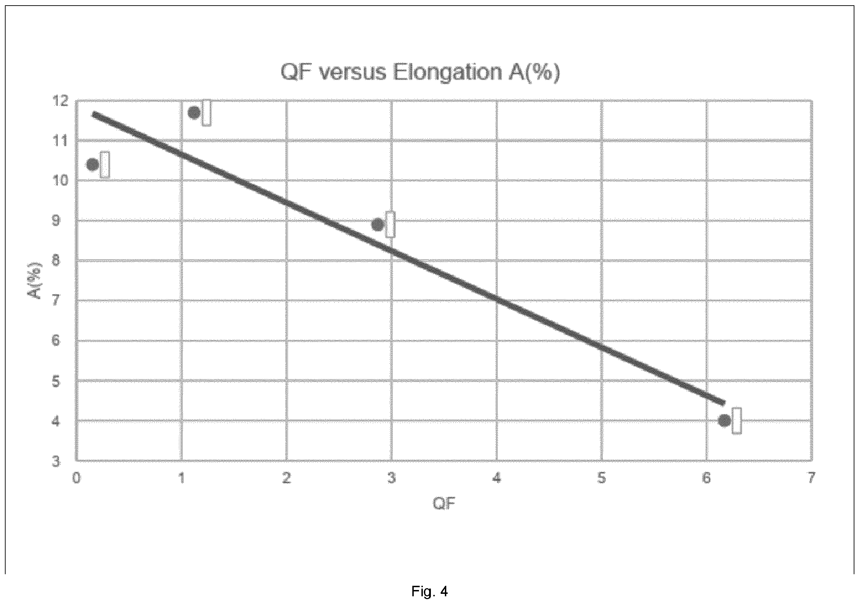

Fig. 4 shows an example of a reference correlation prescription for 3D printed objects having the shape and size of the test pieces, the correlation prescription being presented between the Poisson ratio's of fig. 2 and the damping parameters of fig. 3 on the one hand, and a fracture strain value on the other hand. "QF" refers to the product of the Poisson ratio and the damping parameter, multiplied by 1000 for ease of readability, and "A" refers to fracture strain in percent. As one can see, the correlation between fracture strain A and quality factor QF is linear with a correlation coefficient of 0.90, indicating that the method of the present invention allows obtaining the elongation at break to well within 15%. Note that further tests allow to construct a more precise correlation prescription if desired.

More in particular the fracture strain, also called the elongation at breakage, appears to be approximately proportionate to the product of the Poisson ratio and the damping parameter. In order to allow a certain degree of freedom to more accurately model the correlation, the elongation at breakage A can be derived from the following formula:

$$A = C.P_v^r.D^s \qquad \text{(form. 1)}$$

Herein, 'A' refers to the elongation at breakage, preferably expressed in percentage of the original length of the object, i.e. the length of the object when it is not put under stress, '$P_v$' is the Poisson ratio which is exponentiated by 'r', and 'D' is the damping parameter which is exponentiated by 's'. 'C' is a constant which typically depends on the dimensions and shape of the object.

Hence, preferably the reference correlation prescription has the form of formula 1:

$$A = C.P_v^r.D^s \qquad \text{(form. 1)}$$

wherein r is at least 0.7, such as 0.7, 0.8, 0.9 or any value therebetween or above, and/or r is at most 1.3, such as 1.3, 1.2, 1.1 or any value therebetween and below. Preferably r lies between 0.9 and 1.1, such as 0.9, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10 or any value therebetween, most preferably r is about 1. Further, s is preferably at least 0.7, such as 0.7, 0.8, 0.9 or any value therebetween or above, and/or s is at most 1.3, such as 1.3, 1.2, 1.1 or any value therebetween and below. Preferably s lies between 0.9 and 1.1, such as 0.9, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10 or any value therebetween, most preferably s is about 1.

The main advantage of the present invention is that 3D printed objects can be tested and selected with respect to their fracture strain. Hence, the present invention also concerns a kit comprising a set of 3D printed objects, each 3D printed object comprising a fracture strain which is equal to or higher than a predefined fracture strain threshold. Preferably, the set of 3D printed objects is obtained by

- non-destructively obtaining the fracture strain of a starting set of 3D printed objects using a method according to the present invention and/or using a system according to the present invention,
- comparing the obtained fracture strain with the fracture strain threshold, and
- selecting 3D printed objects from the starting set which comprise a fracture strain which is equal to or higher than a predefined fracture strain threshold.

In some applications, one may actually require 3D printed objects comprising a fracture strain which is lower than a predefined fracture strain threshold. Hence, the present invention also concerns a kit comprising a set of 3D printed objects, each 3D printed object comprising a fracture strain which is equal to or lower than a predefined fracture strain threshold. Preferably, the set of 3D printed objects is obtained by

- non-destructively obtaining the fracture strain of a starting set of 3D printed objects using a method according to the present invention and/or using a system according to the present invention,
- comparing the obtained fracture strain with the fracture strain threshold, and
- selecting 3D printed objects from the starting set which comprise a fracture strain which is equal to or lower than a predefined fracture strain threshold.

Note that these two application described above can be combined such that the 3D printed objects of the set comprise a fracture strain value which is equal to or higher than a first predefined fracture strain threshold, and which is equal to or lower than a second predefined fracture strain threshold.

**Claims**

1. A method for obtaining a fracture strain of a 3D printed object, whereby a longitudinal axis and at least one transversal axis are associated with the 3D printed object, the method comprising the steps of:

   - obtaining a Poisson effect parameter of the 3D printed object along with respect to the longitudinal axis and the transversal axis;
   - obtaining a damping parameter for an eigenfrequency along said longitudinal axis;
   - providing a reference correlation prescription for said 3D printed object between the Poisson effect parameter and the damping parameter on the one hand, and a fracture strain value on the other hand, and
   - deriving the fracture strain of the 3D printed object from said reference correlation prescription.

2. A method according to claim 1, comprising the further steps of:

   - providing an impact, preferably a mechanical impact, to the 3D printed object;
   - obtaining a vibrational response of 3D printed object to the impact in the frequency domain;
   - extracting a set of eigenfrequencies, and a set of attenuations, from the vibrational response, each of said eigenfrequencies corresponding to a vibrational mode of said 3D printed object, and each of said attenuations corresponding to an eigenfrequency of said set of eigenfrequencies, whereby the set of eigenfrequencies comprises at least one eigenfrequency corresponding to a longitudinal mode of the 3D printed object and at least one eigenfrequency corresponding to a transversal mode of the 3D printed object;
   - obtaining the Poisson effect parameter on the basis of the obtained set of eigenfrequencies, and
   - obtaining the damping parameter on the basis the obtained set of attenuations.

3. A method according to any one of the previous claims, whereby the Poisson effect parameter is the Poisson ratio.

4. A method according to claim 3, whereby the reference correlation prescription has the form of formula 1

$$A = C . P_v^r . D^s \qquad \text{(form. 1)}$$

wherein 'A' refers to the elongation at breakage, preferably expressed in percentage of the original length of the object, '$P_v$' is the Poisson ratio which is exponentiated by 'r', 'D' is the damping parameter which is exponentiated by 's', and 'C' is a constant which preferably depends on the dimensions and shape of the object, wherein r is at least 0.7 and r is at most 1.3, and wherein s is preferably at least 0.7 and at most 1.3.

5. A method according to claim 4, wherein r lies between 0.9 and 1.1, and wherein s lies between 0.9 and 1.1.

6. A method for obtaining a fracture strain of a 3D printed object along a longitudinal axis associated with the 3D printed object, whereby at least one transversal axis is associated with the 3D printed object, which transversal axis is perpendicular to the longitudinal axis, the method comprising the steps of:

   - providing an impact, preferably a mechanical impact, to the 3D printed object;
   - obtaining a vibrational response of 3D printed object to the impact in the frequency domain;
   - extracting a set of eigenfrequencies, and a set of attenuations, from the vibrational response, each of said eigenfrequencies corresponding to a vibrational mode of said 3D printed object, and each of said attenuations corresponding to an eigenfrequency of said set of eigenfrequencies, whereby the set of eigenfrequencies comprises at least one eigenfrequency corresponding to a longitudinal mode of the 3D printed object and at least one eigenfrequency corresponding to a transversal mode of the 3D printed object;
   - providing a reference correlation prescription for said 3D printed object between:

      • the at least one eigenfrequency corresponding to a longitudinal mode,
      • the at least one eigenfrequency corresponding to a transversal mode, and
      • a damping parameter of the at least one eigenfrequency corresponding to a longitudinal mode

on the one hand, and a fracture strain value on the other hand, and

- deriving the fracture strain of the 3D printed object from said reference correlation prescription.

7. A method according to any one of the claims 1 to 6, wherein 3D printed object is 3D printed using powder bed fusion, preferably selective laser melting.

8. A system for non-destructively obtaining a fracture strain of a 3D printed object, comprising:

- an impactor for providing an impact to a solid piece, preferably a mechanical impactor;
- a sensor for obtaining a vibrational response of the solid piece to the impact;
- processing means configured to:

• compute the vibrational response in the frequency domain;
• extracting a set of eigenfrequencies, and a set of attenuations, from the vibrational response, each of said eigenfrequencies corresponding to a vibrational mode of said 3D printed object, and each of said attenuations corresponding to an eigenfrequency of said set of eigenfrequencies, whereby the set of eigenfrequencies comprises at least one eigenfrequency corresponding to a longitudinal mode of the 3D printed object and at least one eigenfrequency corresponding to a transversal mode of the 3D printed object;
• computing at least one damping parameter from an attenuation corresponding to said at least one eigenfrequency corresponding to a longitudinal mode of the 3D printed object;
• deriving the fracture strain of the 3D printed object from a reference correlation prescription.

9. A system according to claim 8, whereby the reference correlation prescription is a reference correlation prescription for said 3D printed object between:

• the at least one eigenfrequency corresponding to a longitudinal mode,
• the at least one eigenfrequency corresponding to a transversal mode, and
• a damping parameter of the at least one eigenfrequency corresponding to a longitudinal mode

on the one hand, and a fracture strain value on the other hand.

10. A system according to claim 8, whereby the reference correlation prescription is a reference correlation prescription for said 3D printed object between a Poisson effect parameter and a damping parameter on the one hand, and a fracture strain value on the other hand, and whereby the processing means is further configured for:

- obtaining the Poisson effect parameter on the basis of the obtained set of eigenfrequencies, and
- obtaining the damping parameter on the basis the obtained set of attenuations

11. A kit comprising a set of 3D printed objects, each 3D printed object comprising a fracture strain which is equal to or higher than a predefined fracture strain threshold.

12. A kit according to claim 11, wherein said set of 3D printed objects is obtained by

- non-destructively obtaining the fracture strain of a starting set of 3D printed objects using a method according to any one of the claims 1 to 7 and/or using a system according to any one of the claims 8 to 10,
- comparing the obtained fracture strain with the fracture strain threshold, and
- selecting 3D printed objects from the starting set which comprise a fracture strain which is equal to or higher than a predefined fracture strain threshold.

13. A kit comprising a set of 3D printed objects, each 3D printed object comprising a fracture strain which is equal to or lower than a predefined fracture strain threshold.

14. A kit according to claim 13, wherein said set of 3D printed objects is obtained by

- non-destructively obtaining the fracture strain of a starting set of 3D printed objects using a method according to any one of the claims 1 to 7 and/or using a system according to any one of the claims 8 to 10,
- comparing the obtained fracture strain with the fracture strain threshold, and

- selecting 3D printed objects from the starting set which comprise a fracture strain which is equal to or lower than a predefined fracture strain threshold.

Fig. 1

Fig. 2

Fig. 3

Fig. 4

Europäisches
Patentamt

European
Patent Office

Office européen
des brevets

# EUROPEAN SEARCH REPORT

Application Number

EP 23 18 9883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/129600 A1 (ROBERTS ANDREW FISKE [US] ET AL) 28 April 2022 (2022-04-28) | 11,13 | INV.<br>G01M7/08 |
| A | * paragraphs [0121] - [0123], [0314] * | 1-10,12, 14 | G01N29/04<br>G01N29/12<br>G01N3/30 |
| X | US 2022/288676 A1 (CAUCHY XAVIER [CA] ET AL) 15 September 2022 (2022-09-15)<br>* paragraphs [0120] - [0122] * | 7 | |
| X | JP 6 802357 B2 (UNKNOWN)<br>16 December 2020 (2020-12-16) | 7 | |
| A | * paragraphs [0012], [0013] * | 1-6,8-14 | |
| A | US 2019/011405 A1 (COX NEIL [CA] ET AL) 10 January 2019 (2019-01-10)<br>* paragraphs [0005], [0064], [0065], [0105] - [0129] * | 1-14 | |

TECHNICAL FIELDS
SEARCHED       (IPC)

G01M
G01N
C22C
B29C
B22F

The present search report has been drawn up for all claims

| Place of search | Date of completion of the search | Examiner |
|---|---|---|
| The Hague | 17 January 2024 | Vollmer, Thorsten |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 9883

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2024

| Patent document cited in search report | | | Publication date | Patent family member(s) | | | Publication date |
|---|---|---|---|---|---|---|---|
| US 2022129600 | A1 | | 28-04-2022 | US | 2020320175 | A1 | 08-10-2020 |
| | | | | US | 2022129600 | A1 | 28-04-2022 |
| US 2022288676 | A1 | | 15-09-2022 | AU | 2020266480 | A1 | 23-12-2021 |
| | | | | CA | 3138388 | A1 | 05-11-2020 |
| | | | | CN | 113924177 | A | 11-01-2022 |
| | | | | EP | 3962677 | A1 | 09-03-2022 |
| | | | | JP | 2022530984 | A | 05-07-2022 |
| | | | | KR | 20220019680 | A | 17-02-2022 |
| | | | | US | 2022288676 | A1 | 15-09-2022 |
| | | | | WO | 2020220143 | A1 | 05-11-2020 |
| JP 6802357 | B2 | | 16-12-2020 | CA | 3049188 | A1 | 20-09-2018 |
| | | | | CN | 110382618 | A | 25-10-2019 |
| | | | | EP | 3375819 | A1 | 19-09-2018 |
| | | | | EP | 3440132 | A1 | 13-02-2019 |
| | | | | ES | 2774959 | T3 | 23-07-2020 |
| | | | | JP | 6802357 | B2 | 16-12-2020 |
| | | | | JP | 2019533029 | A | 14-11-2019 |
| | | | | KR | 20190120179 | A | 23-10-2019 |
| | | | | PL | 3440132 | T3 | 18-05-2020 |
| | | | | US | 2019264048 | A1 | 29-08-2019 |
| | | | | WO | 2018167067 | A1 | 20-09-2018 |
| US 2019011405 | A1 | | 10-01-2019 | CA | 3007067 | A1 | 27-07-2017 |
| | | | | EP | 3405768 | A1 | 28-11-2018 |
| | | | | US | 2019011405 | A1 | 10-01-2019 |
| | | | | WO | 2017124188 | A1 | 27-07-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019020825 A1
- WO 2020254698 A
- WO 2022148827 A1
- WO 2022189466 A1
- WO 2023083944 A1